(19) Europäisches Patentamt
European Patent Office
Office européen des brevets

(11) **EP 3 594 728 A1**

(12) **EUROPEAN PATENT APPLICATION**
published in accordance with Art. 153(4) EPC

(43) Date of publication:
**15.01.2020 Bulletin 2020/03**

(21) Application number: **18764656.7**

(22) Date of filing: **06.03.2018**

(51) Int Cl.:
**G02B 6/36** (2006.01)      **B08B 1/00** (2006.01)

(86) International application number:
**PCT/JP2018/008636**

(87) International publication number:
**WO 2018/164144 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2017   JP 2017044621**

(71) Applicants:
• **Fujikura Ltd.**
  **Tokyo 135-8512 (JP)**
• **Tomoegawa Co., Ltd.**
  **Tokyo 104-8335 (JP)**

(72) Inventors:
• **NAKAMA, Akihiro**
  **Sakura-shi, Chiba 285-8550 (JP)**
• **TAKAHASHI, Shigeo**
  **Sakura-shi, Chiba 285-8550 (JP)**
• **ASADA, Hirotaka**
  **Sakura-shi, Chiba 285-8550 (JP)**
• **GOTO, Makoto**
  **Shizuoka-shi,**
  **Shizuoka 424-0831 (JP)**
• **SUZUKI, Masayoshi**
  **Shizuoka-shi, Shizuoka 424-0831 (JP)**

(74) Representative: **Osha Liang**
  **2, rue de la Paix**
  **75002 Paris (FR)**

(54) **CLEANING TOOL AND ADHESIVE BODY**

(57)      [Problem] To allow a cleaning member to be fully in contact with a portion where an optical signal enters and is emitted.

[Solution] This disclosure is a cleaning tool for cleaning an optical connector, the cleaning tool includes: an adhesive body to be in contact with an optical signal region where an optical signal enters and is emitted in the optical connector; and a base that holds the adhesive body. The base has a protruding part on a holding surface of a holding part that holds the adhesive body. The protruding part is arranged to a rear side of a section of the adhesive body to be in contact with the optical signal region.

FIG. 3A

**EP 3 594 728 A1**

**(Cont. next page)**

FIG. 3B

## Description

Technical Field

The present invention relates to a cleaning tool of an optical connector and an adhesive body.

Background Art

Dust or the like adhering to an endface of an optical connector causes an increase in loss of optical signals and the like. To avoid this, cleaning of the endface of the optical connector is needed. Patent Literature 1 describes a cleaning tool that includes a pad-shaped cleaning member having an abutting surface to abut on a joint endface of an optical connector and that is self-adhesive at the abutting surface. Patent Literature 2 describes an adhesive agent to be used for an optical connector cleaner for cleaning a connecting endface of an optical connector.

Citation List

Patent Literature

Patent Literature 1: JP 2002-219421A
Patent Literature 2: JP 2008-180799A

Summary of Invention

Technical Problem

In a case of cleaning an endface of an optical connector, it is important to remove dust adhering to a portion where an optical signal enters and is emitted in the endface of the optical connector. Hence, when a pad-shaped adhesive cleaning member is to abut on the endface of the optical connector, the cleaning member needs to fully abut on the portion where an optical signal enters and is emitted in the endface of the optical connector. However, in the case of the cleaning tool described in Patent Literature 2, when a surface of a base that supports an adhesive body is flat in shape, it is difficult to cause the cleaning member to fully abut on the portion where an optical signal enters and is emitted, in the endface of the optical connector. This consequently causes problems that the contact between the optical connector and the cleaning member is insufficient, that the cleaning member needs to be pressed against the optical connector with high pressure, and the like.

An objective of some embodiments of the present invention is to allow a cleaning member to be fully in contact with a portion where an optical signal enters and is emitted.

Solution to Problem

Some embodiments of the present invention provide a cleaning tool for cleaning an optical connector, the cleaning tool comprising: an adhesive body to be in contact with an optical signal region where an optical signal enters and is emitted in the optical connector; and a base to hold the adhesive body, wherein the base has a protruding part on a holding surface of a holding part to hold the adhesive body, and the protruding part is arranged to a rear side of a section of the adhesive body to be in contact with the optical signal region.

Other features of the invention are made clear by the following description and the drawings.

Advantageous Effects of Invention

According to some embodiments of the present invention, it is possible to cause a cleaning member to be fully in contact with a portion where an optical signal enters and is emitted.

Brief Description of Drawings

[Fig. 1] Fig. 1A and Fig. 1B are explanatory diagrams illustrating a cleaning tool 30 according to the present embodiment.
[Fig. 2] Fig. 2 is a cut perspective view of a ferrule 12 according to a first embodiment.
[Fig. 3] Fig. 3A and Fig. 3B are perspective views explaining a configuration of a cleaning member 31 of a first embodiment.
[Fig. 4] Fig. 4A and Fig. 4B are explanatory diagrams illustrating a cleaning member 31 according to the first embodiment.
[Fig. 5] Fig. 5A is an explanatory diagram illustrating a first modified example. Fig. 5B is an explanatory diagram illustrating a second modified example. Fig. 5C is an explanatory diagram illustrating a third modified example.
[Fig. 6] Fig. 6A and Fig. 6B are explanatory diagrams illustrating a cleaning target according to a second embodiment.
[Fig. 7] Fig. 7A and Fig. 7B are explanatory diagrams illustrating the ferrule 12 according to the second embodiment at the time of cleaning.
[Fig. 8] Fig. 8 is an explanatory diagram according to a third embodiment.
[Fig. 9] Fig. 9 is an explanatory diagram according to a fourth embodiment.
[Fig. 10] Fig. 10A and Fig. 10B are explanatory diagrams illustrating a cleaning member 31 according to a comparative example.

Description of Embodiments

At least the following matters are made clear from the following description and the drawings.

A cleaning tool for cleaning an optical connector will become clear, the cleaning tool comprising: an adhesive body to be in contact with an optical signal region where an optical signal enters and is emitted in the optical connector; and a base to hold the adhesive body, wherein the base has a protruding part on a holding surface of a holding part to hold the adhesive body, and the protruding part is arranged to a rear side of a section of the adhesive body to be in contact with the optical signal region. According to such a cleaning tool, it is possible to allow the cleaning member to be fully in contact with the portion where an optical signal enters and is emitted.

The protruding part is preferably formed linearly, and the protruding part is preferably arranged to a rear side of the section to be in contact with a plurality of the optical signal regions. With this, it is possible to simplify the shape of the protruding part.

The holding part preferably has a peripheral part that protrudes from the holding surface to be in contact with a periphery of the adhesive body. With this, the adhesive body is suppressed from spreading to the outer side than the peripheral part, so that the adhesive body can fully contact with the optical signal region.

A recess is preferably formed in an endface of the optical connector, and the optical signal region is preferably arranged to a bottom part of the recess. Including the protruding part is particularly effective in such a case.

Preferably, B > A where A is a length between the endface and the optical signal region, and B is a protruding amount of the adhesive body protruding from the base. This makes it easier for the adhesive body to be in contact with the optical signal region.

Preferably, C > A > B where A is a length between the endface and the optical signal region, B is a protruding amount of the adhesive body protruding from the base, and C is a thickness of the adhesive body. This makes it easier for the adhesive body to be in contact with the optical signal region.

A lens part serving as the optical signal region is preferably formed in a bottom portion of the recess. Including the protruding part is particularly effective in such a case.

The cleaning tool preferably comprising an alignment part for aligning a position of the protruding part with the optical signal region of the optical connector. With this, it is possible to allow the adhesive body to be surely in contact with the optical signal region.

The adhesive body preferably has a protruding part protruding in a region to be in contact with the optical signal region. With this, it is possible to allow the adhesive body to be fully in contact with the optical signal region.

An adhesive body to be in contact with an optical signal region where an optical signal enters and is emitted in an optical connector will become clear, wherein the adhesive body is held with the holding surface of a holding part having a holding surface formed with a protruding part, and a recessed part to receive the protruding part on the holding surface is provided to a rear side of a section to be in contact with the optical signal region of the optical connector. With such an adhesive body, it is possible to be fully in contact with the portion where an optical signal enters and is emitted.

The protruding part is preferably formed linearly, and is preferably arranged to a rear side of the section to be in contact with a plurality of the optical signal regions, and the recessed part is preferably formed linearly to receive the linear protruding part. With this, it is possible to simplify the shape of the protruding part.

A periphery of the adhesive body is preferably to be in contact with a peripheral part that protrudes from the holding surface of the holding part. As the adhesive body is suppressed from spreading to the outer side than the peripheral part, it is possible for the adhesive body to be fully in contact with the optical signal region.

{First Embodiment}

Overview:

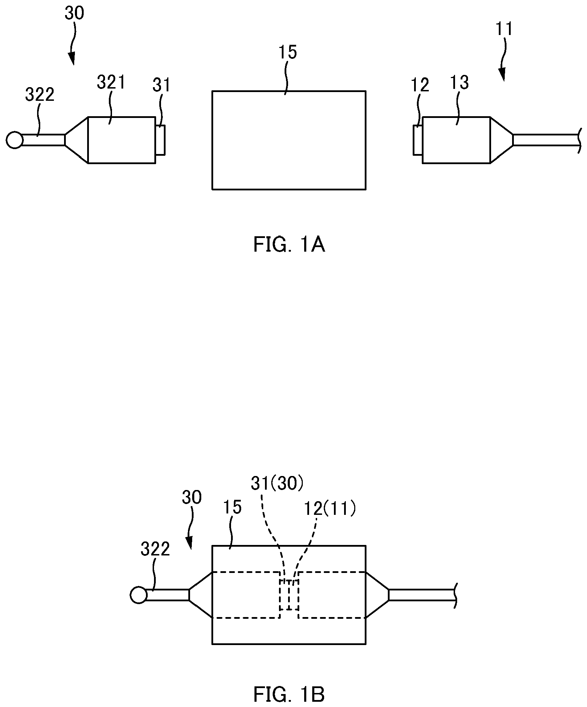

Fig. 1A and Fig. 1B are explanatory diagrams illustrating a cleaning tool 30 according to the present embodiment. An optical connector 11, an adapter 15, and a cleaning tool 30 are included in the drawings.

The optical connector 11 is provided to an end portion of each optical fiber and is a connecting component for optically connecting optical fibers to each other. The optical connector 11 is, for example, an MPO optical connector (F13 type multicore optical fiber connector according to JIS C 5982). The optical connector 11 includes a ferrule 12 and a housing 13. The ferrule 12 is a member that holds end portions of the optical fibers. A structure of the ferrule 12 of the present embodiment is to be described later. The housing 13 is a member that holds the ferrule 12. The housing 13 is formed to be able to be coupled with the adapter 15.

The adapter 15 is a component for connecting optical connectors 11 to each other. A connector insertion opening (not illustrated) is formed at each of both ends of the adapter 15. When the optical connectors 11 are inserted into the respective connector insertion openings, the ferrules 12 of the optical connectors 11 abut on each other to optically connect the optical connectors 11 to each other (to optically connect the optical fibers of the optical connectors 11 to each other). In the present embodiment, the cleaning tool 30 is inserted into one of the connector insertion openings of the adapter 15 (refer to Fig. 1A and Fig. 1B), to clean a connection surface of the ferrule 12 of the optical connector 11 inserted into the other connector insertion opening.

The cleaning tool 30 is a tool for cleaning the connection surface (optical signal surface) of the ferrule 12. The cleaning tool 30 includes a cleaning member 31, a connector part 321, and an operation part 322.

The cleaning member 31 is a member for cleaning the connection surface (optical signal surface) of the ferrule 12. In the present embodiment, an adhesive body 35 (to be described later) is provided to an endface of the cleaning member 31. The adhesive body 35 is brought into contact with the connection surface of the ferrule 12 to cause dust on the connection surface of the ferrule 12 to adhere to the adhesive body 35. In this way, the dust is removed.

The connector part 321 is a part to couple the cleaning tool 30 with the adapter 15. When the cleaning tool 30 is inserted into the adapter 15, the connector part 321 engages with the adapter 15 to thereby couple the cleaning tool 30 with the adapter 15. To enable this, the connector part 321 has substantially the same shape as that of the housing 13 of the optical connector 11. With the cleaning tool 30 including the connector part 321, it makes it easy to align the cleaning member 31 with the optical connector 11. Note that, however, the cleaning tool 30 may not necessarily include the connector part 321.

The operation part 322 is a part for an operator to operate (hold) the cleaning tool 30. Note that, however, the cleaning tool 30 may not necessarily include the operation part 322.

Structure of Cleaning Target:

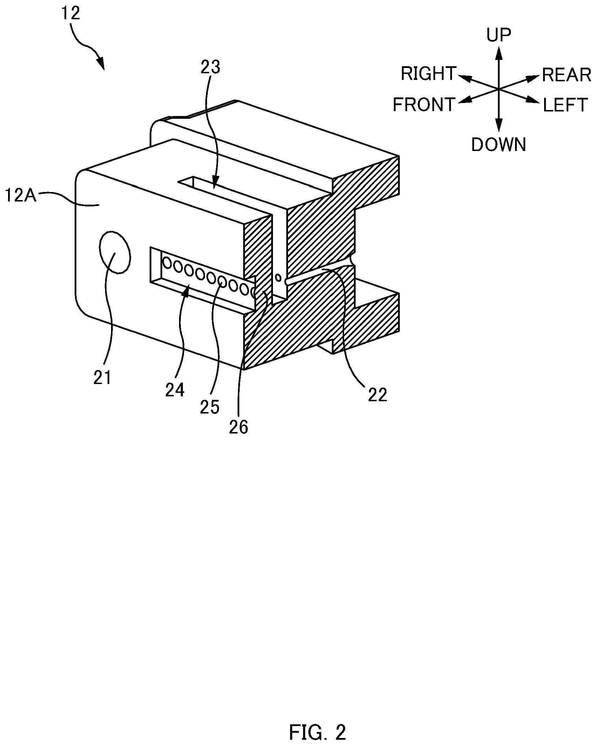

Before a detailed description of the cleaning member 31 of the cleaning tool 30, a structure of the ferrule 12 of the optical connector 11 to be a cleaning target will be described first. Fig. 2 is a cut perspective view of the ferrule 12 according to a first embodiment.

In the following description about the ferrule 12, directions will be defined as illustrated in the drawings. Specifically, a direction of each fiber hole 22 is defined as a "front-rear direction", a side toward a ferrule 12 to be coupled is defined as "front", and an opposite side is defined as "rear". Further, a direction in which two guide pin holes 21 of the ferrule 12 are aligned is defined as a "left-right direction", a right side when a front side is seen from a rear side is defined as "right", and an opposite side is defined as "left". Further, a direction perpendicular to the front-rear direction and the left-right direction is defined as an "up-down direction", a side with an opening in an adhesive filling part 23 is defined as "up", and an opposite side is defined as "down".

The ferrule 12 is a member that holds end portions of optical fibers for transmitting optical signals. A front endface (ferrule endface 12A) of the ferrule 12 serves as an endface to come into contact with an endface of the ferrule to be coupled (or an inner wall surface of the adapter 15). The ferrule 12 of the present embodiment is integrally molded by resin (e.g., transparent resin) that allows transmission of an optical signal. End portions of the plurality of optical fibers (not illustrated) are held inside this ferrule 12.

The ferrule 12 includes the paired guide pin holes 21, a plurality of fiber holes 22, the adhesive filling part 23, a recess 24, a plurality of lens parts 25, and a light transmission part 26. The paired guide pin holes 21 are formed at an interval in the left-right direction. Since Fig. 2 is a cross-sectional view, only one of the guide pin holes 21 is illustrated in the drawing. The plurality of fiber holes 22 are arranged between the paired guide pin holes 21. The unillustrated optical fibers are inserted into the respective fiber holes 22 and are fixed to the ferrule 12 with an adhesive agent filled into the adhesive filling part 23 in a state where the endfaces of the optical fibers abut a wall surface facing opening surfaces of the fiber holes 22 (front wall surface of inner wall surfaces of the adhesive filling part 23).

The recess 24 is a part recessed from the ferrule endface 12A. The recess 24 is provided between the two guide pin holes 21 in the ferrule endface 12A. The recess 24 has a long narrow rectangular shape in the left-right direction so as to correspond to the plurality of optical fiber holes 22.

The lens parts 25 are provided in a bottom surface of the recess 24. With the lens parts 25 being provided in the bottom surface of the recess 24, when the ferrules 12 come to abut each other (the ferrule endfaces 12A are brought into contact with each other), the lens parts 25 are prevented from coming into contact with each other (the lens parts 25 can be maintained in a non-contacting state). The lens parts 25 are arranged so as to correspond to the plurality of respective optical fibers. An optical signal from each of the optical fibers is input and/or output through the corresponding lens part 25. Hence, a surface of each of the lens parts 25 (lens surface) serves as a region to and/or from which an optical signal inputs and/or outputs (optical signal region). In other words, the surface of the lens part 25 (lens surface) serves as a region through which an optical signal passes. The lens part 25 is formed so as to function, for example, as a collimating lens. By inputting and/or outputting an optical signal having a diameter magnified by the lens part 25, influence of misalignment of an optical path and the like can be reduced, and consequently a transmission loss of an optical signal can be suppressed.

The light transmission part 26 is a part that allows optical signals to be transmitted between the endfaces of the optical fibers (not illustrated) and the lens parts 25. Hence, the light transmission part 26 is a part serving as optical paths of the optical signals. Note that, although the ferrule 12 is integrally molded by transparent resin in the present embodiment, components and materials forming the ferrule 12 are not limited to transparent resin as long as at least the lens parts 25 and the light transmission part 26 can transmit optical signals.

Structure of Cleaning Member 31:

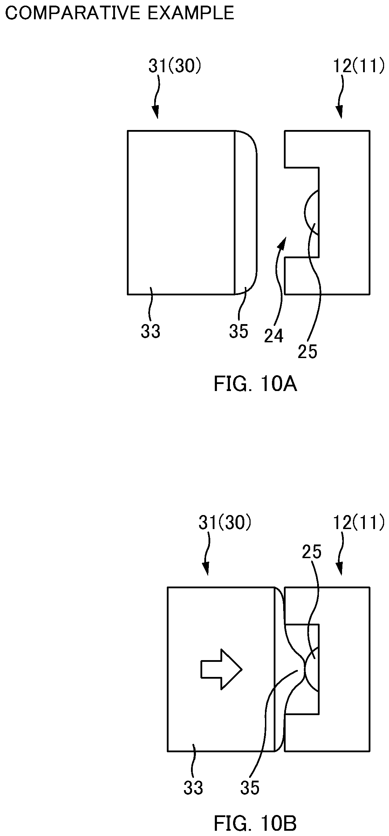

Before a description of the cleaning tool 31 according to the present embodiment, a cleaning member 31 according to a comparative example will be described first. Fig. 10A and Fig. 10B are explanatory diagrams illustrating the cleaning member 31 according to the comparative example.

In the cleaning member 31 of the comparative example, an adhesive body 35 is formed by applying an adhesive agent to a flat surface of a base 33. In the comparative example, since a surface of the base holding the adhesive body is flat, this makes it difficult for the adhesive body 35 to be fully in contact with the lens parts 25 (specifically, the surfaces of the lens parts 25) each serving as a region where an optical signal enters and is emitted (optical signal region) . In particular, in a state where the recess 24 is formed in the ferrule endface 12A and the surfaces of the lens parts 25 (optical signal regions) are placed in the recess 24 as in the ferrule 12 of the present embodiment, it is difficult for the lens parts 25 to be fully in contact with the flat adhesive body 35 when the surface of the base 33 is flat as in the comparative example. Consequently, the contact between the lens parts 25 and the adhesive body 35 may be insufficient (the area of the contact may be insufficient, or force applied for the contact may be insufficient), which may result in insufficient removal of dust adhering to the lens parts 25. Moreover, for the lens parts 25 and the adhesive body 35 to be fully in contact with each other, the cleaning member 31 needs to be pressed against the ferrule 12 with a high pressure. Additionally, such an increase in pressure to be applied to press the cleaning member 31 against the ferrule 12 causes damaging of the adhesive body 35 at the time of cleaning to progress, which reduces the number of times the cleaning member 31 can be used (number of times the cleaning member 31 can be repeatedly used).

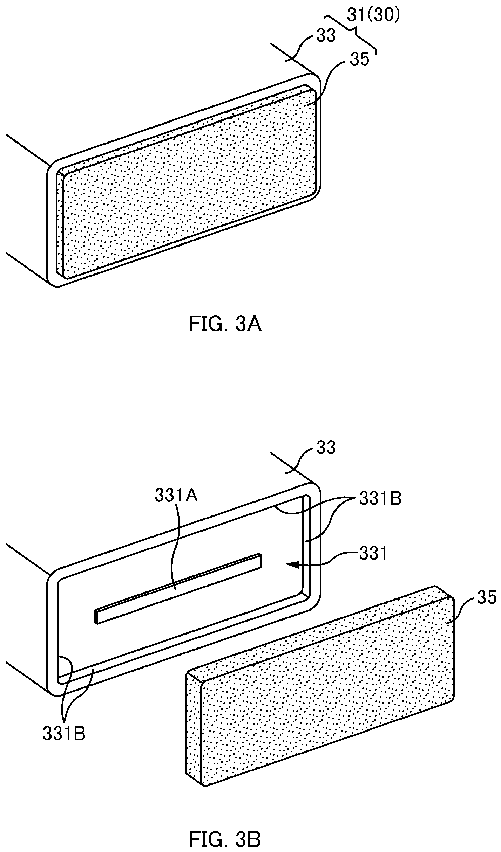

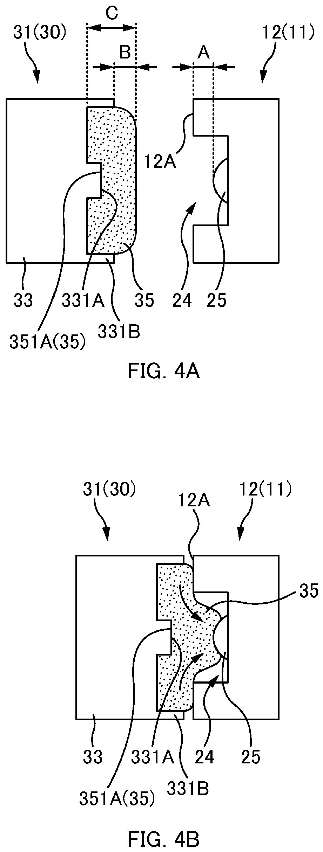

Fig. 3A and Fig. 3B are perspective views explaining a configuration of a cleaning member 31 of a first embodiment. Fig. 4A and Fig. 4B are explanatory views illustrating the cleaning member 31 according to the first embodiment.

The cleaning member 31 includes the base 33 and the adhesive body 35. The base 33 is a member that holds the adhesive body 35.

The base 33 with an adhesive body 35 enables the flexible adhesive body 35 to be pressed against the ferrule 12. An endface of the base 33 has a holding part 331. The holding part 331 is a section for holding the adhesive body 35. Here, the holding part 331 is a recess-shaped section formed on the endface of the base 33. The holding part 331, however, is not limited to a recess shape as long as it can hold the adhesive body 35. The holding part 331 is formed to be larger than the regions where optical signals enter and are emitted (optical signal regions) . Here, the holding part 331 is formed larger than a region in which the plurality of lens parts 25 are formed and is also formed larger than the recess 24 of the ferrule 12. With this, the adhesive body 35 that is held with the holding part 331 can contact the optical signal region.

The holding part 331 of this embodiment has a protruding part 331A on a holding surface that is a bottom surface. The holding part 331 of this embodiment has a peripheral part 331B. The functions of the protruding part 331A and the peripheral part 331B will be described later.

The adhesive body 35 is a member for causing dust to adhere, and is an adhesive member. The adhesive body 35 is a member to be brought into contact with the regions where optical signals of the optical connector enter and are emitted (optical signal regions) . The adhesive body 35 can be used, not only for the cleaning tool 30 of the present embodiment, but also for another member to be used for causing dust to adhere. The adhesive body 35 has such a degree of adhesiveness that, when the adhesive body 35 is brought into contact with and then removed from the ferrule endface 12A, any part of the adhesive body 35 would not remain on the ferrule endface 12A. The adhesive agent to be used for the adhesive body 35 is desired to have removability, and not to be ruptured or the like even if the connector endface is uneven, and at the same time not to remain after being removed, not to come off or have any bubbles in a heat shock test or the like, and to have elastic deformability to be able to fit the uneven surface and restorability against stress. Examples of a constituent of an adhesive agent having such properties include acrylic resin, a rubber-based material represented by butyl rubber, isoprene rubber, styrene-butadiene rubber, and the like, polyvinyl ether resin, silicone resin, and urethane rubber, and any of the above can be selected for use. Acrylic adhesive is most preferable.

The adhesive body according to the present embodiment at least has properties that are capable of compressive deformation, extension deformation, and shear deformation by elastic deformation.

The adhesive body 35 according to the present embodiment preferably has a storage elastic modulus in the range from $1.0 * 10^4$ Pa to $1.0 * 10^6$ Pa. With the storage elastic modulus of the adhesive body 35 being within the above range, this exerts effects of making it easier for the abutting surface of the adhesive body 35 to be fully in contact with the portions where optical signals enter and are emitted, which enables suitable collection of dust. The storage elastic modulus (Pa) indicates a measurement result at 20°C when the measurement was performed under the following conditions.

Measuring device: MARS I (manufactured by Haake Technik), probe diameter: 8 mmφ, sample thickness: 4 mm, load: 5 N, frequency: 1 Hz, rate of temperature increase: 10°C/min

The adhesive body 35 according to the present embodiment preferably has peeling force of 0.1 to 10 N / 20 mm. With the peeling force being within the above range, restorability against stress can be applied and suitable degrees of adhesive strength and peeling force can be maintained, when the adhesive body 35 of the cleaning tool 30 of the present embodiment is pressed against the portions where optical signals enter and are emitted to be elastically deformed. Hence, with the adhesive body 35 according to the present embodiment, it is possible to have a high performance of dust removal, to have little adhesive remained, and to perform sufficient cleaning. When the peeling force is lower than 0.1 N / 20 mm, it may be more likely to have a reduction in performance of dust removal, for the adhesive body to rupture, and for adhesive to remain. When the peeling force exceeds 10 N / 20 mm, it may be more likely for adhesive to remain.

Note that in the present description, peeling force refers to a value obtained by measuring, using a method conforming to JIS Z 2037: 2009, a sample of an adhesive body having a size of 20 mm * 90 mm and a thickness of 4 mm and stacked with a PET film.

The adhesive body 35 is held in the recess-shaped holding part 331 formed in the endface of the base 33. A part of the adhesive body 35 (a section to the base 33 side) is contained in the recess-shaped holding part 331, and a part of the adhesive body 35 (a section to the ferrule 12 side) protrudes from the endface of the base 33. When the cleaning member 31 is pressed against the ferrule 12 during cleaning, a surface of the adhesive body 35 is pressed against the endface of the ferrule 12, while receiving a force from the holding surface of the base 33 (a bottom surface of the holding part 331).

In this embodiment, the base 33 includes the protruding part 331A on the holding surface of the holding part 331 (refer to Fig. 3B). The protruding part 331A is a section protruding to the adhesive body 35 side (the ferrule 12 side) from the holding surface of the holding part 331. As shown in Fig. 4A, this protruding part 331A is arranged to the rear side of the section of the adhesive body 35 that contacts the optical signal region (a region to which an optical signal enters and exits, here the lens part 25). In other words, as shown in Fig. 4A, the protruding part 331A is arranged in a position to oppose the lens part 25 (optical signal region) while sandwiching the adhesive body 35 during cleaning. Namely, the protruding part 331A is arranged to be able to sandwich the adhesive body 35 with the lens part 25 during cleaning. With this, when the cleaning member 31 is pressed to the ferrule 12 during cleaning, the surface of the adhesive body 35 (in more detail, the section that contacts the optical signal region) is pressed to the endface of the ferrule 12 while receiving a force from the protruding part 331A.

In this embodiment, by including the protruding part 331A on the holding surface of the holding part 331, the protruding part 331A presses the adhesive body 35 to the optical signal region (the lens part 25) of the ferrule 12. As a result, in this embodiment, as shown in Fig. 4B, the surface of the adhesive body 35 is easier to come into contact with the corresponding lens part 25, and consequently the adhesive body 35 having adhesiveness can be fully in contact with the lens part 25. In other words, according to the present embodiment, a sufficient contact area can be secured, and the adhesive body 35 can be in contact with the lens parts 25 (optical signal regions) with sufficient force. Hence, according to the present embodiment, the lens parts 25 and the adhesive body 35 can be fully in contact with each other, which consequently makes it easier to remove dust adhering to the lens parts 25. Moreover, according to the present embodiment, even when the pressure to be applied to press the cleaning member 31 against the ferrule 12 is reduced, the adhesive body 35 pressed with the protruding part 331A contacts with the lens parts 25 (optical signal regions) with sufficient force, which facilitates cleaning operation. Additionally, since the pressure to be applied to press the cleaning member 31 against the ferrule 12 may be low, damage to the adhesive body 35 at the time of cleaning can be reduced, which can increase the number of times the cleaning member 31 can be used (number of times the cleaning member 31 can be repeatedly used).

Further, in this embodiment, the protruding part 331A is formed as a ridge (streak) (refer to Fig. 3B), and one protruding part 331A is arranged to the rear side of the section of the adhesive body 35 to be in contact with the plurality of the optical signal regions (the regions in which the optical signals enter and exit, here the lens parts 25) . In other words, the one ridge-like protruding part 331A is arranged to oppose the plurality of lens parts 25 (optical signal regions) by sandwiching the adhesive body 35 during cleaning. That is, by using one protruding part 331A, the adhesive 35 can be sandwiched between the protruding part 331A and the lens parts 25 during cleaning. With the above, the shape of the protruding parts 331A can be simplified. The ridge-like protruding part 331A is formed along the direction in which the plurality of optical signal regions are aligned (here, the left-right direction).

When there are a plurality of lens parts 25 (optical signal regions), a plurality of the protruding parts 331A can be provided to correspond to the respective lens parts 25 instead of forming the ridge-like protruding part 331A. For example, when there are a plurality of lens parts 25, as shown in Fig. 2, a plurality of protruding parts 331A arranged aligned along the left-right direction are preferably provided on the holding surface (bottom surface) of the holding part 331. In this way, as each of the protruding parts 331A can press the adhesive body 35 to each of the lens parts 25 during cleaning, the adhesive body 35 can be fully in contact with each of the lens parts 25.

In this embodiment, the holding part 331 has a peripheral part 331B. The peripheral part 331B is a section to be in contact with the periphery of the adhesive body 35 by protruding from the holding surface (bottom surface) of the holding part 331. The adhesive body 35 is surrounded with the peripheral part 331B, and with this even when a surface of the adhesive body 35 receives a force from the ferrule endface 12A, the adhesive body 35 is suppressed from spreading to the outer side than the peripheral part 331B, thus the surface of the adhesive body 35 easily deforms to rise up near the protruding part 331A and the adhesive body 35 can be fully in contact with the lens parts 25. Note that, as long as the adhesive body 35 can be fully in contact with the lens parts 25, the holding part 331 does not have to include the peripheral part 331B.

In this embodiment, the recess 24 is formed in the ferrule endface 12A, and the optical signal region (here the lens parts 25) into which the optical signal enters and exits is formed in the bottom part of the recess 24. In this way, even when the lens parts 25 (optical signal region) are arranged in the recess 24, and under the circumstance in which the optical signal region is in an innermost position, in this embodiment the surface of the adhesive body 35 deforms to rise up near the protruding part 331A, thus the adhesive body 35 can be fully in contact with the lens parts 25. The configuration in which the protruding part 331A is provided on the holding surface of the holding part 331 and the peripheral part 331B is provided to the holding part 331 is particularly effective in the case where the lens parts 25 (optical signal regions) are arranged in the recess 24 and the optical signal region is in an innermost position (note that, however, the optical connector 11 to be a cleaning target is not limited to an optical connector including the recess 24 in the endface, as will be described later).

Assume, as illustrated in Fig. 4A, that the front-rear direction length between the ferrule endface 12A and the lens part 25 (optical signal region) is A and the protruding amount of the adhesive body 35 from the base 33 is B, the protruding amount B is desirably greater than A (B > A). This makes it easier for the section protruding from the base 33 to come into contact with the lens part 25, which consequently makes it easier for the adhesive body 35 to be fully in contact with the lens parts 25.

The adhesive body 35 can be in contact with the lens part 25 with the adhesive body 35 being deformed as shown in Fig. 4B even if the protruding amount B from the base part 35B is smaller than A (A >B). In this case, assuming that the thickness of the adhesive body 35 is C, the thickness C of the adhesive body 35 is desirably greater than A (C > A > B). With this, the adhesive body 35 is deformed at the time of cleaning to thereby allow the adhesive body 35 to deform to rise up to come into contact with the lens part 25 near the protruding part 331A, which consequently allows the adhesive body 35 to be fully in contact with the lens part 25.

As illustrated in Fig. 3B, the adhesive body 35 has bendability (preferable elastic deformation properties), and hence, even when the optical signal region (region where an optical signal enters and is emitted) has a curved surface as a lens surface of the lens part 25, the adhesive body 35 can have an intimate contact with the curved surface. Hence, according to the present embodiment, it is possible to remove dust adhering to a curved surface as the lens surface of the lens part 25.

Moreover, as illustrated in Fig. 1A, the cleaning tool 30 according to the present embodiment includes the connector part 321 for aligning the cleaning member 31 with the optical connector 11. The cleaning tool 30 including the connector part 321 enables alignment of the lens parts 25 (optical signal regions) of the optical connector 11 with the protruding part 331A. Accordingly, the connector part 321 corresponds to an alignment part for aligning the position of the protruding part 331A with the optical signal regions of the optical connector 11. Note that the alignment part for aligning the position of the protruding part 331A with the optical signal regions of the optical connector 11 is not limited to the connector part 321. The alignment part of the cleaning tool 30 may be formed to directly align the optical connector 11 and the cleaning member 31 (or the base 33) without using the adapter 15. For example, the cleaning tool 30 may include alignment pins (alignment part). The alignment pins may be fitted to the guide pin holes 21 of the ferrule 12 to directly align the optical connector 11 and the cleaning member 31 (or the base 33).

The adhesive body 35 in this embodiment has a recessed part 351A, as shown in Fig. 4A. The recessed part 351 is formed to the rear side of the section that comes in contact with the optical signal regions. By having the recessed part 351A in the adhesive body 35, the recessed part 351A can receive the protruding part 331A. It should be noted that, the recessed part 351A may be formed in advance to the adhesive body 35 before fitting the adhesive body 35 in the holding part 331, or the recessed part 351A may be formed by contacting with the protruding part 331A and deforming when fitting the adhesive body 35 in the holding part 331.

The recessed part 351A of the adhesive body 35 in this embodiment is formed linearly such as to be able to receive the linear protruding part 331A. With this, the shape of the recessed part 351A can be simplified. Note that, in this case, the linear recessed part 351A is formed to the rear side of the section that comes in contact with the plurality of optical signal regions. In the case where the plurality of protruding parts 331A are formed in the holding part 331 to correspond to the respective plurality of lens parts 25 (optical signal regions), the adhesive body 35 may have a plurality of recessed parts 351A to correspond to each of the protruding parts 331A to receive each of the protruding parts 331A.

Modified Examples:

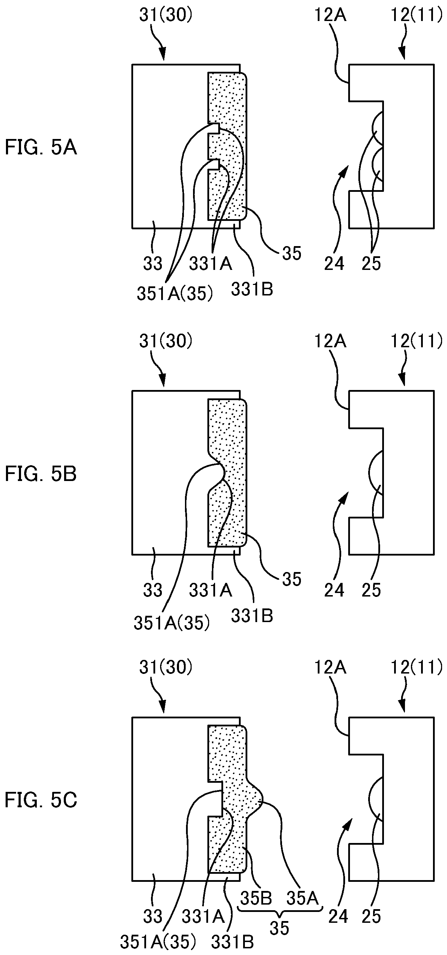

Fig. 5A is an explanatory diagram according to a first modified example. A ferrule 12 of the first modified example to be a cleaning target includes two lens parts 25 arranged side by side in an up-down direction. In such a case of including the plurality of lens parts 25 (optical signal regions) in the up-down direction, a plurality of protruding parts 331A aligned in the up-down direction so that the protruding parts 331A correspond to the respective lens parts 25 may be provided. Each of the protruding parts 331A in Fig. 5A is preferably protruding linearly in the left-right direction (direction perpendicular to the sheet in Fig. 5A) . Also in the first modified example, since the protruding parts 331A are arranged to a rear side of the section of the adhesive body 35 to be in contact with the optical signal regions (regions where the optical signals enter and exit, here the lens parts 25), this makes it easier for the surface of the adhesive 35 to come into contact with the lens part 25, and consequently the adhesive body 35 having adhesiveness can be fully in contact with the lens parts 25.

Fig. 5B is an explanatory diagram according to a second modified example. In the second modified example, the protruding part 331A is not square-cornered but is rounded. In this way, the shape of the protruding part 331A can be changed appropriately.

Fig. 5C is an explanatory diagram according to a third modified example. In the third modified example, the adhesive body 35 has a protrusion 35A protruding in a region to be in contact with the lens parts 25. The protrusion 35A is a section protruding from a base part 35B of the adhesive body 35. According to the third modified example, it is easier for the protrusion 35A to come into contact with the lens parts 25, and consequently the adhesive body 35 having adhesiveness can be fully in contact with the lens parts 25.

{Second Embodiment}

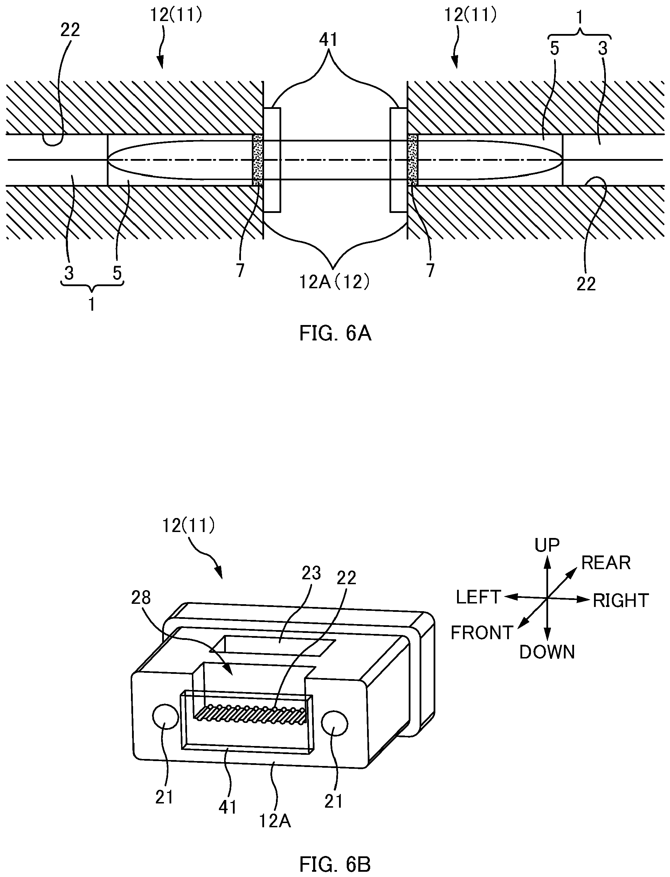

Fig. 6A and Fig. 6B are explanatory diagrams illustrating a cleaning target according to a second embodiment. Fig. 6A is an explanatory diagram illustrating a vicinity of an optical signal region according to the second embodiment. Fig. 6B is a perspective view of a ferrule 12 according to the second embodiment.

To each of fiber holes 22 of the ferrule 12 illustrated in Fig. 6B, a lensed fiber 1 is inserted as illustrated in Fig. 6A. The lensed fiber 1 is an optical fiber formed by fusion-splicing a GRIN lens 5 to a tip of a single-mode optical fiber 3.

A flat plate 41 capable of transmitting an optical signal is provided to an endface of the ferrule 12. This allows the flat plate 41 to be arranged ahead of the lensed fibers 1 inserted into the respective fiber holes 22 of the ferrule 12. The flat plate 41 is provided perpendicularly to an optical axis of the lensed fiber 1. Note that a refractive index matching material 7 is filled (into a space) between the flat plate 41 and an endface of the lensed fiber 1. A matching material filling part 28 for filling the refractive index matching material 7 is provided in the ferrule 12.

Light propagated through the single-mode optical fiber 3 are converted into parallel light by the GRIN lens 5, and the parallel light passing through the refractive index matching material 7 and the flat plate 41 is emitted from an outer surface of the flat plate 41. The parallel light entering a flat plate 41 from an outer surface of the flat plate 41 passes through the flat plate 41 and a refractive index matching material 7 to enter a GRIN lens 5, converges, through the GRIN lens 5, at a single-mode optical fiber 3, and the convergent light propagates the single-mode optical fiber 3. Hence, in the second embodiment, each region through which parallel light passes in the outer surface of the flat plate 41 serves as an optical signal region where an optical signal enters and is emitted.

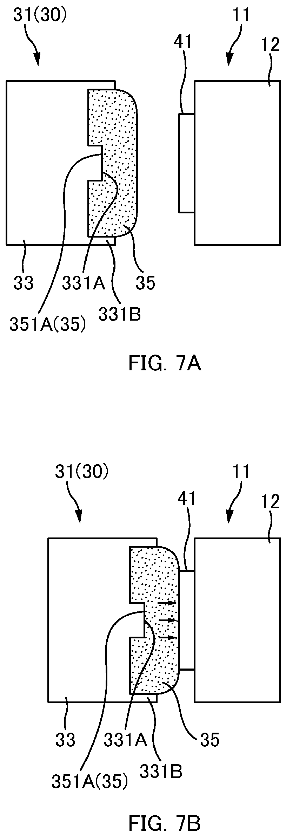

Fig. 7A and Fig. 7B are explanatory diagrams illustrating the ferrule 12 of the second embodiment at the time of cleaning. The cleaning member 31 includes a base 33 and an adhesive body 35 as in the first embodiment. As illustrated in Fig. 7A, the base 33 has a protruding part 331A on a holding surface of the holding part 331, and this protruding part 331A is arranged to the rear side of the section of the adhesive body 35 to be in contact with the optical signal region (the region in which the optical signals enter and exit, refer to Fig. 6A). In other words, the protruding part 331A is arranged in the position to oppose the optical signal region while sandwiching the adhesive body 35 during cleaning.

Also in the second embodiment, the adhesive body 35 can be in contact with the optical signal region with sufficient force. Hence, also in the second embodiment, the optical signal region and the adhesive body 35 can be fully in contact with each other, which consequently makes it easier to remove dust adhering to the optical signal region. Moreover, also in the second embodiment, even when the pressure to be applied to press the cleaning member 31 against the ferrule 12 is reduced, the adhesive body 35 can be in contact with the optical signal region with sufficient force in the position of the protruding part 331A, which facilitates cleaning operation. Additionally, since the pressure to be applied to press the cleaning member 31 against the ferrule 12 may be low, damage to the adhesive body 35 at the time of cleaning can be reduced, which can increase the number of times the cleaning member 31 can be used (number of times the cleaning member 31 can be repeatedly used).

Note that, although the recess 24 is formed in the endface of the optical connector 11 to be a cleaning target in the above-described first embodiment, the optical connector 11 to be a cleaning target may not necessarily include the recess 24 in the endface as illustrated in the second embodiment. In the above-described first embodiment, each of the lens parts 25 serves as an optical signal region (region where an optical signal enters and is emitted). However, as illustrated in the second embodiment, the optical signal region may be a flat surface as the outer surface of the flat plate 41 instead of a curved surface as the surface of the lens part 25.

{Third Embodiment}

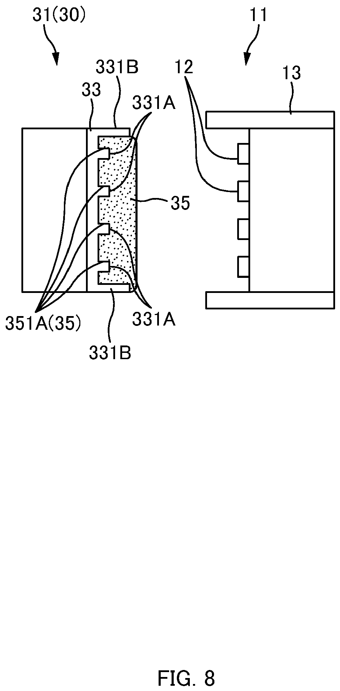

Fig. 8 is an explanatory diagram of a third embodiment.

To the right side of the drawing is illustrated an optical connector 11 to be cleaned in the third embodiment. In the third embodiment, a housing 13 holds a plurality of ferrules 12.

To the left side of the drawing is illustrated a cleaning tool 30 of the third embodiment. In the third embodiment, a cleaning member 31 of the cleaning tool 30 includes a base 33 and an adhesive body 35. It should be noted that, in the third embodiment the base 33 is configured couplably to the housing 13 of the optical connector 11. With this, the adhesive body 35 (particularly, protruding parts 331A) can be easily positioned in respect to the optical connector 11.

In the third embodiment, the base 33 has a holding part 331 to hold the adhesive body. The holding part 331 of the third embodiment is formed wider than an area in which the plurality of ferrules 12 of the optical connector 11 are arranged. With this, the adhesive body 35 held with the holding part 331 can be made to contact the optical signal regions.

As shown in Fig. 8, also in the third embodiment, the base 33 has the protruding parts 331A on a holding surface of the holding part 331. The protruding parts 331A are arranged to the rear side of the section of the adhesive body 35 to be in contact with optical signal regions (regions to which an optical signal enters and exits) on endfaces of the ferrules 12. In other words, also in the third embodiment, the protruding parts 331A are arranged in positions opposing the optical signal regions while sandwiching the adhesive body 35 during cleaning. Also in the third embodiment, the adhesive body 35 can be made to contact the optical signal regions with a sufficient force. As shown in this third embodiment, the adhesive body 35 can be provided to be able to contact the plurality of ferrules 12.

{Fourth Embodiment}

The cleaning tool 30 according to the above-described embodiments includes the connector part 321 and the operation part 322 as illustrated in Fig. 1A and Fig. 1B. The cleaning tool 30 is inserted into one of the connector insertion openings of the adapter 15 to thereby clean the connection surface of the ferrule 12 of the optical connector 11. However, the cleaning tool 30 is not limited to such a shape and usage.

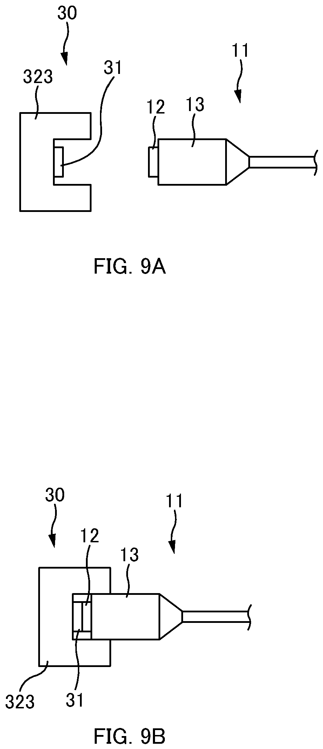

Fig. 9A and Fig. 9B are explanatory diagrams illustrating a cleaning tool 30 according to a fourth embodiment. The cleaning tool 30 according to the fourth embodiment is formed as a cap that protects the connection surface of the ferrule 12 of the optical connector 11. The cleaning tool 30 of the fourth embodiment includes a cleaning member 31 and a cap part 323. The cleaning member 31 is formed similarly to that of the above-described embodiments . The cleaning member 31 has a base 33 having protruding part (s) 331A on a holding surface of a holding part 331, and the protruding part (s) 331A are arranged to a rear side of a section of an adhesive body 35 to be in contact with optical signal regions (regions in which an optical signal enters and exits) of an endface of the ferrules 12 (not illustrated in Fig. 9A and Fig. 9B). The adhesive body 35 of the cleaning member 31 has a recessed part 351A to receive the protruding part(s) 331A to the rear side of the section to be in contact with the optical signal regions. The cap part 323 is a part that protects the connection surface of the ferrule 12 of the optical connector 11 and is formed to be detachable from the optical connector 11. In the third embodiment, by attaching the cleaning tool 30 to the optical connector 11 so that the cap part 323 covers the optical connector 11, the connection surface of the ferrule 12 of the optical connector 11 can be protected by the cap part 323. In addition, by the adhesive body 35 coming into contact with the connection surface of the ferrule 12, dust on the connection surface of the ferrule 12 is caused to adhere to the adhesive body 35 to thereby be able to remove the dust.

As illustrated above, the cleaning tool 30 may be formed as a cap and may be formed as another member. Moreover, the adhesive body 35 may be used for other kinds of cleaning tool instead of being used only for the above-described cleaning tool 30. The adhesive body 35 may further be used, without being limited to a cleaning tool, for various purposes as long as the purposes are to be in contact with an optical connector.

{Others}

The foregoing embodiments are for facilitating the understanding of the present invention, and are not to be construed as limiting the present invention. The present invention may be modified and/or improved without departing from the gist thereof, and it goes without saying that the present invention encompasses any equivalents thereof.

Reference Signs List

1:      Lensed fiber;
3:      Single-mode optical fiber;
5:      GRIN lens;
7:      Refractive index matching material;
11:     Optical connector;
12:     Ferrule;
12A:    Ferrule endface;
13:     Housing;
15:     Adapter;
21:     Guide pin hole;
22:     Fiber hole;
23:     Adhesive filling part;
24:     Recess;
25:     Lens part;
26:     Light transmission part;
28:     Matching material filling part;
30:     Cleaning tool;
31:     Cleaning member;
33:     Base;
331:    holding part;
331A:   protruding part;
331B:   peripheral part;

35: Adhesive body;
35A: Protrusion;
35B: Base part;
351A: recessed part;
321: Connector part;
322: Operation part;
41: Flat plate.

**Claims**

1. A cleaning tool for cleaning an optical connector, the cleaning tool comprising:

   an adhesive body to be in contact with an optical signal region where an optical signal enters and is emitted in the optical connector; and
   a base to hold the adhesive body, wherein
   the base has a protruding part on a holding surface of a holding part to hold the adhesive body, and
   the protruding part is arranged to a rear side of a section of the adhesive body to be in contact with the optical signal region.

2. The cleaning tool according to claim 1, wherein
   the protruding part is formed linearly, and
   the protruding part is arranged to a rear side of the section to be in contact with a plurality of the optical signal regions.

3. The cleaning tool according to claim 1 or 2, wherein
   the holding part has a peripheral part that protrudes from the holding surface to be in contact with a periphery of the adhesive body.

4. The cleaning tool according to any one of claims 1 to 3, wherein
   a recess is formed in an endface of the optical connector, and
   the optical signal region is arranged to a bottom part of the recess.

5. The cleaning tool according to claim 4, wherein

$$B > A$$

   where A is a length between the endface and the optical signal region, and
   B is a protruding amount of the adhesive body protruding from the base.

6. The cleaning tool according to claim 4, wherein

$$C > A > B$$

   where A is a length between the endface and the optical signal region,
   B is a protruding amount of the adhesive body protruding from the base, and
   C is a thickness of the adhesive body.

7. The cleaning tool according to any one of claims 4 to 6, wherein
   a lens part serving as the optical signal region is formed in a bottom portion of the recess.

8. The cleaning tool according to any one of claims 1 to 7, comprising
   an alignment part for aligning a position of the protruding part with the optical signal region of the optical connector.

9. The cleaning tool according to any one of claims 1 to 8, wherein
   the adhesive body has a protruding part protruding in a region to be in contact with the optical signal region.

10. An adhesive body to be in contact with an optical signal region where an optical signal enters and is emitted in an optical connector, wherein
    the adhesive body is held with the holding surface of a holding part having a holding surface formed with a protruding part, and
    a recessed part to receive the protruding part on the holding surface is provided to a rear side of a section to be in contact with the optical signal region of the optical connector.

11. The adhesive body according to claim 10, wherein,
    the protruding part is formed linearly, and is arranged to a rear side of the section to be in contact with a plurality of the optical signal regions, and
    the recessed part is formed linearly to receive the linear protruding part.

12. The adhesive body according to claim 10 or 11, wherein
    a periphery of the adhesive body is to be in contact with a peripheral part that protrudes from the holding surface of the holding part.

FIG. 1A

FIG. 1B

FIG. 2

31(30)

33

35

FIG. 3A

33

331A

331B

331

35

331B

FIG. 3B

FIG. 4A

FIG. 4B

FIG. 5A

31(30)

12A    12(11)

33    331A    35

351A(35)    331B

24    25

FIG. 5B

31(30)

12A    12(11)

33    331A    35

351A(35)    331B

24    25

FIG. 5C

31(30)

12A    12(11)

33    331A    35B    35A    24    25

351A(35)    331B    35

FIG. 6A

FIG. 6B

FIG. 7A

FIG. 7B

FIG. 8

FIG. 9A

FIG. 9B

COMPARATIVE EXAMPLE

31(30)　　　　　　　12(11)

33　　35　24

25

FIG. 10A

31(30)　　　　12(11)

25

33　　35

FIG. 10B

## INTERNATIONAL SEARCH REPORT

| International application No. |
|---|
| PCT/JP2018/008636 |

A.  CLASSIFICATION OF SUBJECT MATTER
Int.Cl.  G02B6/36(2006.01)i, B08B1/00(2006.01)i

According to International Patent Classification (IPC) or to both national classification and IPC

B.  FIELDS SEARCHED

Minimum documentation searched (classification system followed by classification symbols)
Int.Cl.  G02B6/36-6/40

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | US 2004/0088813 A1 (COX, L. R.) 13 May 2004,<br>paragraphs [0019]-[0023], fig. 1-6<br>& WO 2004/043619 A1 & EP 1558406 A1 | 1-3, 9-12<br>4-8 |
| Y | JP 2008-180799 A (TOMOEGAWA CO., LTD.) 07 August<br>2008, paragraphs [0009]-[0013], fig. 1<br>(Family: none) | 1-12 |
| Y | US 2002/0006261 A1 (KROW, JR. et al.) 17 January<br>2002, paragraphs [0023], [0026], fig. 2-4<br>& US 6374030 B2 | 1-12 |

☒  Further documents are listed in the continuation of Box C.      ☐  See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 10.05.2018 | 22.05.2018 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2018/008636 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2013-68820 A (FUJIKURA LTD.) 18 April 2013, paragraphs [0049]-[0055], [0076], fig. 8, 9, 11, 15<br>& JP 6023412 B2 | 1-12 |
| Y | JP 2011-22505 A (FUJIKURA LTD.) 03 February 2011, paragraphs [0028]-[0031], fig. 6, 7<br>& JP 5412200 B2 | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002219421 A
- JP 2008180799 A